# EUROPÄISCHE PATENTSCHRIFT

(11) **EP 0 738 641 B1**
(45) Veröffentlichungstag und Bekanntmachung des Hinweises auf die Patenterteilung: **25.07.2001**
(21) Anmeldenummer: 96105529.0
(22) Anmeldetag: 06.04.1996
(51) Int. Cl.: B60T 17/22

(54) **Energieversorgung für ein Schienenfahrzeug**
Power supply for a railway vehicle
Alimentation d'énergie électrique pour un véhicule ferroviaire

(30) Priorität: 19.04.1995 CH 111795
(43) Veröffentlichungstag der Anmeldung: 23.10.1996
(73) Patentinhaber: DaimlerChrysler Rail Systems GmbH, 13627 Berlin (DE)
(72) Erfinder: Kuenzle, Harry, 9400 Rorschacherberg (CH)
(74) Vertreter: Gmeiner, Christa, c/o DaimlerChrysler AG

(56) Entgegenhaltungen:
- CH-A- 564 445
- CH-A- 578 446
- US-A- 3 660 653
- US-A- 4 632 205

## Beschreibung

Die vorliegende Erfindung betrifft eine Einrichtung zur primären Energieversorgung einer elektrischen Überwachungseinrichtung an einem Schienenfahrzeug, insbesondere Güterwagen ohne Anschluss an eine interne oder externe Energiequelle.

Überwachungseinrichtungen sind heute auch bei Güterwagen aktuell, weil mechanische Schäden an Radlagern und Aufhängungen an einem einzelnen Wagen innerhalb eines grösseren Zugverbandes vom Lokführer nicht oder zu spät bemerkt werden und so zu Unfällen mit grosser Tragweite führen können bzw. schon geführt haben.

Die einzige, international standardisierte Einrichtung bei Güterzügen, inkl. Lokomotive, ist die pneumatische Hauptbremsleitung, welche einerseits die Speisung der Bremsen jedes Wagens und anderseits die Steuerung des Bremsvorganges des ganzen Zuges übernimmt. Wird eine Energieversorgung für entsprechende Zwecke wie Überwachungseinrichtungen, Manipulatoren, Kühleinrichtungen etc benötigt, werden Batterien mit schienenradgetriebenen Ladegeneratoren oder Notstromaggregate eingesetzt.

Eine primäre Energieversorgung der vorgenannten Art zeigt die Patentschrift CH 578 446. Es wird ein zwischen einer Achse eines Schienenfahrzeuges und einem von dieser Achse antreibbaren Aggregat angeordnetes Getriebe vorgeschlagen. Das Getriebe weist eine Vorrichtung auf zum manuellen Auskuppeln und Aufstecken einer Handkurbel zu Prüfzwecken. Es wird über das Getriebe beispielsweise ein Kühlkompressor angetrieben und mit der Handkurbel eine Funktionsprüfung durchgeführt. Bei Nichtgebrauch der Einrichtung bleibt das Getriebe ausgekuppelt. Es handelt sich hier um eine mechanische Energieabzweigung bei fahrendem Eisenbahnwagen.

Weiterhin ist in der US 3,660,653 eine Geschwindigkeitsregeleinrichtung für ein Schienenfahrzeug angegeben , die als primäre Energieversorgung ein pneumatisches System, insbesondere die Hauptbremsleitung verwendet, wobei ein Generator zur Erzeugung elektrischer Energie vorgesehen ist, der über ein Fahrzeugrad angetrieben ist.

Die vorgenannte Energieversorgungen benötigen aufwendige mechanische Einrichtungen für die Energieerzeugung oder Energieabzweigung. Diese mechanischen Einrichtungen sind zudem einem mehr oder weniger grossen Abnützung unterworfen und benötigen ferner periodische Wartung.

Es ist deshalb die Aufgabe der vorliegenden Erfindung, eine Energieversorgung für eine Überwachungseinrichtung mit Signalübermittlung bei Güterwagen zu schaffen, welche die vorgenannten Nachteile nicht aufweist und welche für die Abzweigung der Primärenergie keine mechanisch bewegten Übertragungsmittel benötigt.

Diese Aufgabe wird durch die in den Ansprüchen gekennzeichnete und in der Figur dargestellte Erfindung gelöst.

Die Erfindung hat u.a. den Vorteil, dass die Wartungsarbeiten für den periodischen Unterhalt von mechanisch bewegten Übertragungsmitteln entfallen und dass der Investitionsaufwand pro Fahrzeug entsprechend kleiner wird.

Ein weiterer Vorteil besteht darin, dass mit einem vorhandenen Medium eine Signalübertragung möglich ist

Die Erfindung wird im folgenden anhand einer, ein Ausführungsbeispiel darstellenden, Zeichnung näher erläutert.

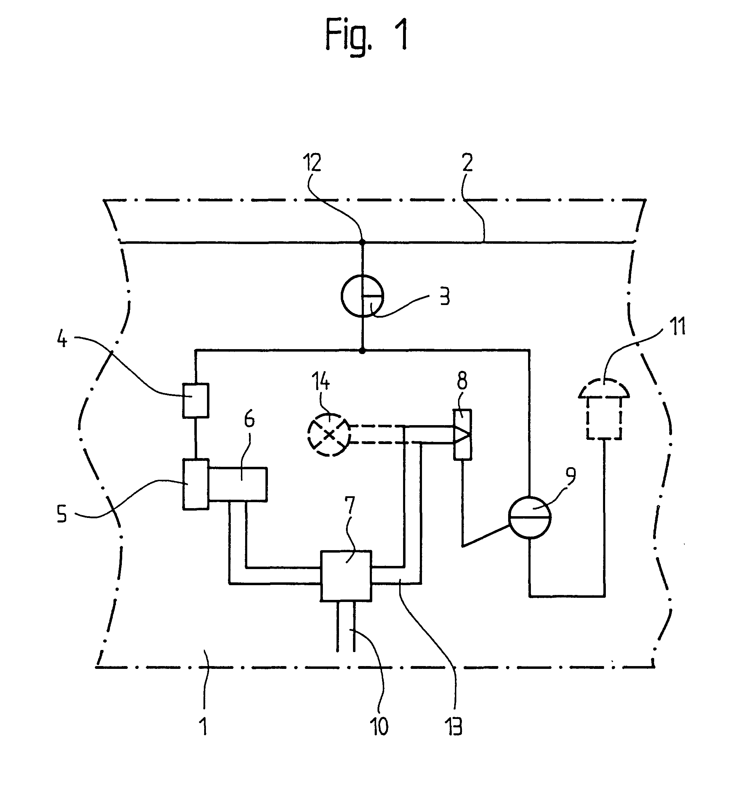

Die Fig. 1 zeigt anhand einer schematischen Darstellung die erfindungsgemässe Energieversorgung und -Umwandlung, sowie das Prinzip und die Elemente der Signalisierung.

Mit 1 ist ein Güterwagen bezeichnet und mit 2 eine Hauptbremsleitung. Die Hauptbremsleitung 2 weist eine Anzapfung 12 auf, welche zu einem Absperrventil 3 führt. Nach dem Absperrventil 3 verzweigt sich die Druckluftleitung in einen linken und in einen rechten Strang. Der linke Strang führt über ein Druckreduzierventil 4 zu einem Druckluftmotor 5, welcher mit einem Stromgenerator 6 verbunden ist. Der rechte Strang führt zu einem Notbremsventil 9, das in der Fachsprache als EP-Ventil bezeichnet wird. Nach dem Notbremsventil 9 führt die Druckluftleitung zu einem akustischen Alarmgeber 11 und von dort ins Freie.

Der elektrische Kreis beginnt mit der elektrischen Verbindung zwischen dem Stromgenerator 6 und einer elektronischen Einrichtung 7. Die elektronische Einrichtung 7 weist Sensoreingänge 10 und mindestens einen Steuersignalausgang 13 auf. Letzterer speist mit einem aktiven Steuersignal einen Aktuator 8, in der beispielhaften Form eines Solenoids, welcher seinerseits das Notbremsventil 9 betätigt, also öffnet. Mit 14 ist noch ein optischer Alarmgeber bezeichnet, welcher an den Steuersignalausgang 13 angeschlossen wird.

Im folgenden wird die Funktion der Einrichtung näher erläutert. Der Druckluftmotor 5 wird beim fahrbereiten oder fahrenden Zug mit druckreduzierter Druckluft aus der Hauptbremsleitung 2 gespeist. Die Druckreduzierung hat den Zweck, dass der Druckluftmotor 5 auch bei Bremsmanövern immer noch mit einem Druck von beispielsweise ein bis zwei Bar betrieben werden kann, für welchen Druck dieser dann auch ausgelegt wurde. Der Maximaldruck in der Hauptbremsleitung 2 beträgt etwa fünf Bar. Der Druckluftmotor 5 kann von beliebigem Typ sein. Es wird auf guten Wirkungsgrad geachtet, damit der Luftverbrauch klein ist. Bekannte Motortypen sind Kolben- und Schiebermotoren sowie Luftturbinen mit Reduktionsgetrieben. Als Stromgenerator 6 werden Alternatoren oder Gleichstromgeneratoren mit entsprechenden Reglern eingesetzt. Die elektronische Einrichtung 7 ist beispielsweise als uP-gesteuerter Rechner ausgeführt. Mit den nicht dargestellten Sensoren werden beispielsweise Radlagertemperaturen, Beschleunigungen und Wege gemessen. Sind die gemessenen Werte an den Sensoreingängen 10 innerhalb einer vorgegebenen Toleranz, bleibt der Steuersignalausgang 13 der elektronischen Einrichtung 7 passiv. Übersteigt ein Sensorsignal die Toleranzschwelle, so liegt ein gefährlicher mechanischer Defekt vor, der eine entsprechende Reaktion erfordert. Die Auswertung der Sensorsignale in der elektronischen Einrichtung 7 erzeugt dann ein aktives Steuersignal am Steuersignalausgang 13, welches den Aktuator 8 betätigt und durch diesen das Notbremsventil 9 geöffnet wird. Der dadurch erzeugte Druckabfall in der Hauptbremsleitung 2 wird vom Lokführer sofort registriert, der Zug wird abgebremst und die immer noch entweichende Luft beim Stillstand des Zuges erzeugt beim schadhaften Wagen ein akustisches Alarmsignal durch den akustischen Alarmgeber 11, womit der defekte Wagen lokalisiert werden kann. Es ist dem Lokführer ausserdem möglich, mittels seiner Steuereinrichtungen einen Restdruck in der Hauptbremsleitung 2 aufrecht zu erhalten, so dass das akustische Alarmsignal stets vorhanden ist. Das Notbremsventil 9 bleibt im einmal geöffneten Zustand und muss manuell wieder geschlossen werden, wenn die Auslöseursache behoben ist. Auch mit einem kleinen Restdruck ist die elektronische Einrichtung 7 noch aktiv, so dass zusätzlich zum akustischen Signal noch ein optisches Alarmsignal erzeugt werden kann mittels des optischen Alarmgebers 14. Dieser kann beispielsweise als kleine Blitzleuchte ausgebildet sein.

Sollte sich das Ansprechen der Überwachungseinrichtung als Fehlalarm erweisen, so wird beim entsprechenden Wagen, welcher das Notbremsventil 9 geöffnet hat und den Alarm ausgelöst hat der Absperrhahn 3 geschlossen und das Notbremsventil 9 in die Geschlossenstellung zurückgestellt, so dass die Fahrt fortgesetzt werden kann. Zudem wird der Wagen als defekt registriert und bezeichnet, damit dieser bei nächster Gelegenheit einer technischen Zwischenkontrolle unterzogen werden kann.

Anhand der beschriebenen Funktion der primär mit Druckluft gespeisten Überwachungseinrichtung und der pneumatischen Signalübertragung durch registrierbaren Druckabfall in der Hauptbremsleitung 2 kann eine gefährliche Unfallursache behoben werden. Durch die wenigen und einfachen Elemente für die Energieversorgung sind die Wartungsarbeiten auf ein absolutes Minimum beschränkt. Zur Schonung der Überwachungseinrichtung bei Nichtbedarf, z.B. beim Rangieren und für gelegentliche Kontrollen kann diese mittels dem Absperrhahn 3 von der Hauptbremsleitung 2 getrennt und somit die primäre Energiezufuhr unterbrochen werden. Der kleine Leistungsbedarf der Überwachungseinrichtung ergibt keine spürbare Mehrbelastung für die Bremsdruckluftanlage.

Die beschriebene Überwachungseinrichtung kann auch pro Wagen mehrmals vorhanden sein, z.B. pro Radachse oder pro Drehgestell. Es ist dann, insbesondere bei langen Wagen, auch mehr als eine Anzapfung 12 vorhanden. Anderseits kann pro Anzapfung 12 mehr als eine Überwachungseinrichtung gespeist werden, wobei pro Überwachungseinrichtung ein Absperrhahn 3 vorgesehen ist. Der Stromgenerator 6 kann sehr klein dimensioniert werden, wenn die Abluft des Antriebes auch noch für dessen Kühlung verwendet wird. Die Energieumformung kann auch mit einer einzigen Maschine ausgeführt werden, indem beispielsweise das Lüfterrad des Stromgenerators 6 als Luftturbine ausgebildet wird.

Der akustische Alarmgeber 11 wird in der einfachsten Form als Pfeife ausgebildet. In einer weiteren Variante kann diese Funktion auch von einer Druckluftsirene ausgeführt werden.

## Patentansprüche

1. Einrichtung zur primären Energieversorgung einer elektrischen Überwachungseinrichtung an einem Schienenfahrzeug, insbesondere Güterwagen (1) ohne externen oder internen Anschluss an eine elektrische Energiequelle, wobei als primäre Energieversorgung die pneumatische Hauptbremsleitung dient, dadurch gekennzeichnet, dass die primäre Energieversorgung eine Umformung der primären Druckluftenergie in eine elektrische Energie zur Speisung der elektronischen Überwachungseinrichtung (7) aufweist und dass die Energieumformung einen Druckluftmotor (5) und einen vom Druckluftmotor (5) angetriebenen Stromgenerator (6) aufweist.

2. Einrichtung nach Anspruch 1, dadurch gekennzeichnet, dass die primäre Energieversorgung als Anzapfung (12) an der pneumatischen Hauptbremsleitung (2) ausgeführt ist.

3. Einrichtung nach Anspruch 1, dadurch gekennzeichnet, dass die primäre Energieversorgung einen Absperrhahn (3) aufweist.

4. Einrichtung nach Anspruch 1, dadurch gekennzeichnet, dass die primäre Energieversorgung ein Druckreduzierventil (4) aufweist.

5. Elektronische Überwachungseinrichtung mit einer Einrichtung zur primären Energieversorgung nach einem der Ansprüche 1 bis 4, dadurch gekennzeichnet, dass die elektronische Überwachungseinrichtung (7) mindestens einen Sensoreingang (10) und mindestens einen Steuersignalausgang (13) aufweist und dass ein aktives, vom Steuersignalausgang (13) abgehendes Signal die Betätigung eines Notbremsventils (9) bewirkt.

6. Elektronische Überwachungseinrichtung nach Anspruch 5, dadurch gekennzeichnet, dass eine, durch Betätigung des Notbremsventils (9) aktivierbare, akustische Alarmeinrichtung (11) vorhanden ist.

7. Elektronische Überwachungseinrichtung nach einem der Ansprüche 5 oder 6, dadurch gekennzeichnet, dass die Signalübermittlung zum Zugfahrzeug dem Fahrzeugführer als Druckabfall in der pneumatischen Hauptbremsleitung (2) angezeigt wird, wenn die Betätigung des Notbremsventils (9) von der elektronischen Einrichtung (7) ausgelöst wird.

8. Elektronische Überwachungseinrichtung nach einem der Ansprüche 5 bis 7, dadurch gekennzeichnet, dass eine, von der elektronischen Einrichtung (7) aktivierbare, optische Alarmeinrichtung (14) vorhanden ist.

## Claims

1. Device for supplying primary power to an electrical monitoring device on a rail vehicle, in particular goods wagon (1) without an external or internal connection to an electrical power source, the pneumatic main brake line serving as the primary power supply, characterized in that the primary power supply has a converter for converting the primary compressed air energy into electrical energy for feeding the electronic monitoring device (7), and in that the energy converter has a compressed air motor (5) and a current generator (6) driven by the compressed air motor (5).

2. Device according to Claim 1, characterized in that the primary power supply is embodied as tap (12) on the pneumatic main brake line (2).

3. Device according to Claim 1, characterized in that the primary power supply has a lock up tap (3).

4. Device according to Claim 1, characterized in that the primary power supply has a pressure-reducing valve (4).

5. Electronic monitoring device having a device for supplying primary power according to one of Claims 1 to 4, characterized in that the electronic monitoring device (7) has at least one sensor input (10) and at least one control signal output (13), and in that an active signal which is output by the control signal output (13) causes the activation of an emergency brake valve (9).

6. Electronic monitoring device according to Claim 5, characterized in that an acoustic alarm device (11) which can be actuated by activating the emergency brake valve (9) is provided.

7. Electronic monitoring device according to one of Claims 5 or 6, characterized in that the transmission of signals to the traction vehicle is indicated to the driver of the vehicle as a drop in pressure in the pneumatic main brake line (2) in case the activation of the emergency brake valve (9) is caused by the electronic device (7).

8. Electronic monitoring device according to one of Claims 5 to 7, characterized in that a visual alarm device (14) which can be actuated by the electronic device (7) is provided.

## Revendications

1. Dispositif pour l'alimentation en énergie primaire d'un dispositif électrique de surveillance dans un véhicule ferroviaire, en particulier un wagon de marchandises (1), sans raccordement interne ou externe à une source d'énergie électrique, dans lequel la conduite générale pneumatique de frein sert d'alimentation en énergie primaire, caractérisé en ce que l'alimentation en énergie primaire présente une conversion de l'énergie primaire de l'air comprimé en énergie électrique pour l'alimentation du dispositif électronique de surveillance (7) et en ce que la conversion d'énergie présente un moteur à air comprimé (5) et un générateur électrique (6) entraîné par le moteur à air comprimé (5).

2. Dispositif suivant la revendication 1, caractérisé en ce que l'alimentation en énergie primaire est réalisée sous la forme d'une dérivation (12) de la conduite générale pneumatique de frein (2).

3. Dispositif suivant la revendication 1, caractérisé en ce que l'alimentation en énergie primaire présente un robinet d'arrêt (3).

4. Dispositif suivant la revendication 1, caractérisé en ce que l'alimentation en énergie primaire présente une vanne de réduction de pression (4).

5. Dispositif électronique de surveillance avec un dispositif pour l'alimentation en énergie primaire suivant l'une quelconque des revendications 1 à 4, caractérisé en ce que le dispositif électronique de surveillance (7) présente au moins une entrée de capteur (10) et au moins une sortie de signal de commande (13) et en ce qu'un signal actif émanant de la sortie de signal de commande (13) provoque la commande d'une soupape de frein de secours (9).

6. Dispositif électronique de surveillance suivant la revendication 5, caractérisé en ce qu'il comporte un dispositif d'alarme sonore (11), activable par la commande de la soupape de frein de secours (9).

7. Dispositif électronique de surveillance suivant l'une quelconque des revendications 5 ou 6, caractérisé en ce que la transmission du signal relatif au véhicule du train au conducteur du convoi est affichée sous la forme d'une chute de pression dans la conduite générale pneumatique de frein (2), lorsque la commande de la soupape de frein de secours (9) est activée par le dispositif électronique de surveillance (7).

8. Dispositif électronique de surveillance suivant l'une quelconque des revendications 5 à 7, caractérisé en ce qu'il comporte un dispositif d'alarme visuelle (14), activable par le dispositif électronique (7).
